# EUROPÄISCHE PATENTSCHRIFT

(11) **EP 0 549 865 B1**
(45) Veröffentlichungstag und Bekanntmachung des Hinweises auf die Patenterteilung: **01.07.1998**
(21) Anmeldenummer: 92118161.6
(22) Anmeldetag: 23.10.1992
(51) Int. Cl.: C09F 9/00

(54) **Verfahren zur Herstellung von Trockenstoffen für flüssige Beschichtungsstoffe, Trockenstoffe und deren Verwendung**
Preparation process of siccatives for fluid coating materials; siccatives and use thereof
Procédé de préparation de siccatifs pour matériaux de revêtement fluides; siccatifs et leur utilisation

(30) Priorität: 25.10.1991 DE 4135264
(43) Veröffentlichungstag der Anmeldung: 07.07.1993
(73) Patentinhaber: Heuser, Wilfried, Dr., D-45549 Sprockhövel (DE)
(72) Erfinder: Heuser, Wilfried, Dr., D-45549 Sprockhövel (DE)
(74) Vertreter: Behrendt, Arne, Dipl.-Ing.

(56) Entgegenhaltungen:
- EP-A- 0 304 754
- DE-B- 1 117 247
- FR-A- 1 095 484
- Farbe und Lack, 71. Jahrg., Nr.4, 1965; Rieck; S. 282-291

## Beschreibung

Die Erfindung betrifft ein Verfahren zur Herstellung von lösemittelfreien, feinverteilten Trockenstoffen, die in einen flüssigen Beschichtungsstoff eingebracht werden, der ein oxidativ trocknendes Bindemittel enthält, so-wie nach diesem Verfahren hergestellte Trockenstoffe und deren Verwendung.

Beschichtungsstoffe enthalten prinzipiell Bindemittel, Lösemittel und Hilfsmittel (Additive) und, soweit es sich nicht um Produkte handelt, die nach dem Auftragen und Auftrocknen einen durchscheinenden Beschichtungsfilm ergeben, auch Pigmente.

Aus der Vielzahl der Bindemittel sollen hier die gebräuchlichsten Harze und Öle Beachtung finden, die aufgrund ihres chemischen Aufbaus in der Lage sind, über ihre reaktionsfähigen Doppelbindungen durch Aufnahme von Luftsauerstoff Makromoleküle zu bilden. Durch diesen Vorgang trocknet der Beschichtungsstoff. Typische Vertreter solcher Bindemittel sind pflanzliche Öle und Harze, die Fettsäuren mit Doppelbindungen (Öl-, Linol-, Linolen-, Ricinol-, Ricinen-, Eläostearinsäure u.a.) enthalten, so z. B. Lein-, Holz-, Soja-, Ricinusöl, sowie deren Modifikationen, ferner Alkydharze, Epoxidester und ölmodifizierte Polyurethane.

Um bestimmte Eigenschaften eines Beschichtungsstoffes zu beeinflussen, werden Hilfsmittel (Additive) zugegeben. Hierzu zählen u.a. die Trockenstoffe. Diese werden Beschichtungsstoffen zugesetzt, die oxidativ trocknende Bindemittel enthalten, um den Trocknungsprozeß zu beschleunigen.

Zur Herstellung von Trockenstoffen, die zur Beschleunigung des Trocknungsprozesses den Beschichtungsstoffen zugesetzt werden, ist aus FR-A-1 095 484 ein Verfahren bekannt, bei dem man ein in Wasser gelöstes Metallsalz mit natürlichen Adsorbanten (Bentonit, Montmorillonit) vermischt und reagieren läßt. Die so erhaltene Suspension wird mehrere Stunden lang gerührt. Nach Entfernen des Wassers wird der Trockenstoff in den Beschichtungsstoff eingebracht. In der diesem Verfahren zugrundeliegenden Ionenaustauschreaktion werden Metallionen des Adsorbanten durch das Metallion (beispielsweise Kobalt oder Mangan) des Metallsalzes ersetzt.

Moderne Trockenstoffe sind in der Regel organometallische und in organischen Lösemitteln und Bindemitteln lösliche Verbindungen. In DE-B-1 117 247 werden organometallische Verbindungen und deren Mischungen offenbart, die in freier Salzform oder in organischen Lösemitteln gelöst den trocknenden Ölen zugesetzt werden, um den Trocknungsvorgang zu beschleunigen.

Aus dem Aufsatz von Rieck in der Zeitschrift Farbe und Lack 71 (1965), S. 282-291 ist bekannt, daß Trockenstoffe, nachdem sie dem Beschichtungsstoff zugesetzt worden sind, teilweise an der Oberfläche von Titandioxyd-Pigmenten adsorbieren, und daß die Wirksamkeit der Trockenstoffe durch diese Adsorption nicht negativ beeinflußt wird.

In den metallorganischen trocknungsbeschleunigenden Wirkstoffen kommt der Metallkomponente die Aufgabe zu, die Trocknung des oxidativ trocknenden Bindemittels des Beschichtungsstoffes katalytisch zu beschleunigen, während der organische Anteil (Säurerest) die Löslichkeit in dem organischen Lösemittel bewirkt. Als wirksame Metallkomponenten kommen folgende Metalle zum Einsatz: Kobalt, Blei, Mangan, Eisen, Cer, Zirconium, Calcium, Barium, Zink und andere; der gebundene organische Anteil rührt aus der Umsetzung mit natürlichen oder synthetischen Carbonsäuren (Metallseifen) her. Von herausragender Bedeutung sind heute Wirkstoffe, die aus 2-Ethylhexansäure und dem jeweiligen Metall bzw. Metallgemisch aufgebaut sind (Octoate).

Die so beschriebenen Wirkstoffe sind bei Raumtemperatur von Natur aus fest und in organischen Lösemitteln löslich. Die gelöste flüssige Form wird handelsüblich vertrieben und in dieser Form in die Beschichtungsstoffe eingebracht. Trockenstofflösungen sind unter der Bezeichnung "Sikkative" bekannt. Je nach späterer Anwendung kommen Lösemittel mit unterschiedlicher chemischer Struktur und somit Polarität und Siedebereich zum Einsatz; in der Regel werden aliphatische und aromatische Kohlenwasserstoffe bevorzugt. Die in Lösemittel gelösten Sikkative werden Beschichtungsstoffen zugesetzt, die ebenfalls als Lösemittel organische Verbindungen (aliphatische Kohlenwasserstoffe, aromatische Kohlenwasserstoffe, Alkohole, Ester, Keton und andere) enthalten. Die Lösemittel im Beschichtungsstoff bewirken keine chemische Umsetzung und gehen nach dem Applizieren durch Verdunstung wieder aus dem Beschichtungsfilm heraus.

Aus Umweltschutzgründen ist bei Beschichtungsstoffen immer mehr der Zwang gegeben, die Verwendung von organischen Lösemitteln zu reduzieren oder ganz zu unterlassen, da die gesetzlichen Auflagen für solche lösemittelhaltigen Produkte sowohl für die Hersteller solcher Beschichtungsstoffe, als auch für den Verarbeiter immer strenger und somit kostenintensiver werden. Zur Reduzierung der Emissionen an organischen Lösemitteln müssen Hersteller und Verarbeiter entweder ihre Anlagen, in denen die lösemittelhaltigen Beschichtungsstoffe eingesetzt werden, durch emissionsmindernde Maßnahmen nachrüsten, oder sie entscheiden sich für wäßrige, lösemittelarme, besser noch lösemittelfreie Beschichtungsstoffe. Auch hinsichtlich der Lagerung brennbarer Flüssigkeiten, wie sie als organische Lösemittel z.Zt. in Trockenstofflösungen enthalten sind, und den damit verbundenen Vorkehrungen hinsichtlich Gewässerschutz, Explosions- und Brandschutz, lassen sich Produkte, die organische Lösemittel enthalten, zukünftig nur noch unter aufwendigen Bedingungen handhaben. Daher gewinnen solche Beschichtungsstoffe an Bedeutung, bei denen von vornherein auf die Verwendung von organischen Lösemitteln verzichtet wird; dann entfallen nämlich die durch die organischen Lösemittel bedingten Probleme.

In den letzten Jahren laufen Entwicklungen, Beschichtungsstoffe lösemittelarm zu machen und die üblicherweise noch dominierenden organischen Lösemittel durch Wasser als ungefährliches Lösemittel zu ersetzen. So können mit niedrigmolekularen Bindemitteln, die Doppelbindungen enthalten und somit einer oxidativen Trocknung zugänglich sind, z. B. mit pflanzlichen ölen, Beschichtungsstoffe konzipiert werden, die von Haus aus nur noch einen geringen Lösemittelanteil zur Verarbeitung brauchen (High-Solid-Produkte); jedoch nach dem jetzigen Stand der Technik müssen diese Beschichtungsstoffe mit Trockenstofflösungen versetzt werden, wobei im Trockenstoff enthaltene Lösemittelanteile überflüssig und von der Art und den daraus resultierenden Eigenschaften sogar unerwünscht sind.

Das gleiche gilt für Beschichtungsstoffe mit wasserverdünnbaren Bindemitteln, wie z.B. wäßrigen Alkydharzen, wo die organischen Lösemittel möglichst eliminiert und durch Wasser ersetzt werden sollen. Auch in solchen Beschichtungsstoffen werden Bindemittel eingesetzt, die oxidativ trocknende chemische Gruppierungen enthalten, wie z. B. wasserverdünnbare Alkydharze und entsprechend modifizierte Öle, und die somit ebenfalls Trockenstoffe zur Trocknungsbeschleunigung benötigen. Diesen wäßrigen Beschichtungsstoffen werden üblicherweise die bewährten metallorganischen Trockenstoffe zugesetzt, die in organischen Lösemitteln gelöst sind. Dabei treten Probleme auf, die auf Wechselwirkungen der in Wasser unlöslichen metallorganischen Verbindungen mit den Bestandteilen des Wasserlackes zurückzuführen sind. Die Wirkung des Trockenstoffes kann durch Hydrolyse oder durch Komplexbildung, z.B. mit den zur Neutralisation vorhandenen Aminen, gemindert werden.

Um solche Probleme zu vermeiden, werden heute emulgierte Trockenstoffe verwendet, die neben den unerwünschten organischen Lösemitteln noch erhebliche Mengen an Emulgatoren enthalten, um eine gleichmäßige und wirksame Verteilung zu erreichen. Die Zusammensetzung dieser käuflichen Produkte wird als Firmen-"Know-how" in der Regel nicht preisgegeben. Dadurch werden durch den Zusatz solcher emulgierten Trockenstoffe die Beschichtungsstoffeigenschaften unkontrolliert und häufig sogar negativ beeinflußt.

Es ist Aufgabe der Erfindung, Trockenstoffe und ein Verfahren zu deren Herstellung bereitzustellen, die es ermöglichen, metallorganische trocknungsbeschleunigende Wirkstoffe ohne Lösemittel und andere unerwünschte Begleitstoffe und dennoch voll wirksam in einen Beschichtungsstoff einzubringen.

Zur Lösung dieser Aufgabe schlägt die Erfindung ein Verfahren gemäß dem Anspruch 1 vor.

Es hat sich überraschenderweise herausgestellt, daß die in der Literatur diskutierten Schwierigkeiten, die bei der Verwendung von organometallischen Wirkstoffen auftraten, dann vermieden werden, wenn die metallorganischen Wirkstoffe vor dem Einbringen in den Beschichtungsstoff an Feststoffpartikel angelagert werden und die so hergestellten Trockenstoffe in die flüssigen Bestandteile des Beschichtungsstoffes eingemischt werden. Als Trägerstoffe für den Wirkstoff kommen Feststoffpartikel in Frage, die in dem Beschichtungsstoff als Feststoffbestandteile gebräuchlich sind, wie z. B. Füllstoffe oder Pigmente. Es können aber auch organische Feststoffpartikel als Trägerstoffe verwendet werden, die sich nach dem Einmischen in den flüssigen Bestandteil des Beschichtungsstoffes auflösen. In beiden Fällen werden keine unerwünschte Substanzen in den Beschichtungsstoff eingeschleppt.

Die Trockenstoffe gemäß der Erfindung lassen sich wegen des Fehlens von flüchtigen, brennbaren organischen Lösemitteln gefahrlos lagern, transportieren und handhaben, da keine speziellen Sicherheitsmaßnahmen getroffen werden müssen.

Bei Zugrundelegung gleicher wirksamer Metallanteile ergaben flüssige metallorganische Trockenstoffe und erfindungsgemäß beschriebene Trockenstoffe in fester Form in Beschichtungsstoffen mit organischen Lösemitteln die gleichen Trockenzeiten. In wasserverdünnbaren Beschichtungsstoffen sind die pulverförmigen Trockenstoffe gemäß der Erfindung, bei denen die metallorganische Verbindung an einer Trägerstoffoberfläche sitzt, im Vergleich zu flüssigen metallorganischen Trockenstoffen bei gleichem Metallgehalt je nach Lagerzeit der Trockenstoffe, der Art der eingesetzten Metalle, sowie den Lagerzeiten des Beschichtungsstoffes reaktiver oder zumindest gleichreaktiv hinsichtlich der trocknungsbeschleunigenden Wirkung. Bei dem vergleichenden Einsatz von flüssigen metallorganischen Trockenstoffen für wäßrige Systeme auf Kobaltbasis wurden bei Produkten verschiedener Hersteller bei gleichem Metallgehalt unterschiedliche Wirksamkeiten in wasserverdünnbaren Beschichtungsstoffen festgestellt. Im Vergleich zu pulverförmigen Trockenstoffen gemäß der Erfindung war die Trockenzeit vergleichbar oder bis zu 15 % schlechter. Wurden die Beschichtungsstoffe nach zwei Monaten noch einmal hinsichtlich ihrer Trockenzeit untersucht, so konnten unabhängig vom Hersteller der flüssigen Trockenstoffe bei gleichem Metallgehalt Trocknungsunterschiede bis zu 25 % beobachtet werden. Es zeigte sich jedoch, daß bei Verwendung des erfindungsgemäß beschriebenen Trockenstoffpulvers die Trocknung unter gleichen Bedingungen schneller erfolgte, der Trockenstoff somit reaktiver war.

Ferner verlieren offensichtlich die flüssigen metallorganischen Trockenstoffe je nach Hersteller bei der Lagerung einen Teil ihrer Wirksamkeit. Die lange gelagerten flüssigen metallorganischen Trockenstoffe zeigten im Beschichtungsstoff unterschiedliche, aber tendenziell schlechtere Trocknungsergebnisse als frisch verwendete flüssige Trockenstoffe, eine Erscheinung, die bei Lagerung des Trockenstoffpulvers gemäß der Erfindung nicht beobachtet wird. Diese bei der Verwendung von kobalthaltigen flüssigen Trockenstoffen auftretenden Fakten wurden hinsichtlich der teilweise verlängerten Trockenzeit im Vergleich zu Trockenstoffpulvern gemäß der Erfindung auch bei anderen flüssigen Trockenstoffen, z. B. auf Mangan-, Blei-, Zirkoniumbasis, in wäßrigen Systemen festgestellt.

In wäßrigen Beschichtungsstoffen liegen die oxidativ trocknenden Bindemittel je nach chemischem Aufbau und Art der Herstellung in wasserlöslicher oder wasseremulgierter Form vor. Wenn sich beide Formen auch in der Art der Verteilung des Bindemittels im Wasser unterscheiden, so gilt doch für beide, daß der pH-Wert zwischen 7 und 10 liegt. Hervorgerufen wird dieser pH-Wert durch die Verwendung von Aminen und/oder Ammoniak. Werden diesen flüssigen Beschichtungsstoffen flüssige metallorganische Trockenstoffe zugesetzt, so beginnt die Hydrolyse der Metallseife; das Metallion oxidiert durch vorhandenen Sauerstoff und ergibt mit Aminen und/oder Ammoniak eine stabile Komplexverbindung, die die Fähigkeit verloren hat, Sauerstoff zu übertragen und somit die Trocknung zu beschleunigen. Wenn es sich hierbei auch um eine langsam verlaufende Reaktion handelt, kann festgestellt werden, daß frisch hergestellte wäßrige Beschichtungsstoffe bestimmte Trocknungszeiten haben; nach einigen Wochen jedoch verlangsamt sich der Trocknungsvorgang stark, und nach einem noch längerem Zeitraum tritt je nach Trockenstofftyp, Art des Beschichtungsstoffes und Sauerstoffangebot keine Trocknung mehr ein. Diese Erscheinungen konnten bei allen marktüblichen flüssigen metallorganischen Trockenstoffen in unterschiedlicher Geschwindigkeit beobachtet werden. Beim Einsatz des erfindungsgemäß beschriebenen Trockenstoffpulvers zeigt sich demgegenüber eine wesentlich bessere Stabilität der Trockenstoffwirkung im Beschichtungsstoff. Offensichtlich unterliegen die an dem Trägerstoff angelagerten Metallseifen aufgrund des Herstellungsverfahrens des umgebenden Mediums nicht so schnell den beschriebenen Vorgängen (Hydrolyse, Oxidation, Komplexbildung) zur Verringerung der Trockenstoffwirkung bis hin zur Inaktivierung.

Der bei einigen metallorganischen flüssigen Trockenstoffen im Laufe der Lagerung auftretende Wirksamkeitsverlust hat seinen Grund vermutlich darin, daß sich im System aus Metallseife, Emulgator, Lösemittel und gegebenenfalls geringen Mengen an Wasser hydrolytische Vorgänge abspielen. Werden solche flüssigen metallorganischen Trockenstoffe wäßrigen Beschichtungsstoffen zugesetzt, so reagiert im alkalischen Medium, wie vorher beschrieben, das Metall mit dem immer zumindest in geringen Mengen vorhandenen Sauerstoff spontan zur höherwertigen Form, die komplexiert und dann die Fähigkeit der Sauerstoffübertragung verloren hat. Die Wirksamkeit solcher flüssigen metallorganischen Trockenstoffe hängt somit stark vom Alter vor Zugabe und vom Sauerstoffangebot im Beschichtungsstoff ab. Dieses Nachlassen der Trocknungswirkung tritt bei dem Trockenstoffpulver gemäß der Erfindung nicht auf.

Für das Anlagern der metallorganischen Wirkstoffe an die als Trägerstoffe dienenden Feststoffpartikel werden die Wirkstoffe zunächst in einem geeigneten Lösemittel gelöst, sodann in gelöster Form mit den als Trägerstoffe dienenden Feststoffpartikeln vermischt und anschließend durch Verdampfen des Lösemittels an die als Trägerstoffe dienende Feststoffpartikel angelagert.

Alternativ können die Wirkstoffe auch erhitzt und auf die als Trägerstoffe dienenden Feststoffpartikel aufgedampft werden.

Bei den nach dem Verfahren gemäß der Erfindung hergestellten Trockenstoffen kommen als Trägerstoffe in erster Linie anorganische Pigmente oder Füllstoffe auf der Basis von Silikaten, Sulfaten, Carbonaten, Oxiden und Phosphaten sowie in Elementform in Frage, wobei diese Trägerstoffe eine Teilchengröße zwischen 0,002 und 200 µm aufweisen.

Alternativ kommen als Trägerstoffe organische Pigmente und Additive in Frage, die eine Primärteilchengröße von bis zu 40 µm aufweisen, wenn sie in dem Lösemittel des Beschichtungsstoffes unlöslich sowie eine Primärteilchengröße von bis zu 3000 µm aufweisen können, wenn sie in dem Lösemittel des Beschichtungsstoffes löslich sind. Gegebenenfalls kann der Trägerstoff auch ein mit organischen Produkten modifiziertes anorganisches Pulver sein.

Der erfindungsgemäße Trockenstoff wird vorzugsweise in flüssigen, oxidativ trocknende Bindemittel enthaltenden Beschichtungsstoffen verwendet, die Wasser als Löse- bzw. Verdünnungsmittel enthalten. Sie kann aber auch in flüssigen, oxidativ trocknende Bindemittel enthaltenden Beschichtungsstoffen verwendet werden, die organische Lösemittel enthalten, beispielsweise Lösemittel vom Typ aliphatische und aromatische Kohlenwasserstoffe, Ester, Ketone, Alkohole, Ether.

Die Metalle der als Wirkstoff in Frage kommenden metallorganischen Verbindungen sind vorzugsweise Kobalt, Blei, Mangan, Eisen, Zirconium, Calcium, Barium, Zink, Cer oder Lithium, wobei diese Metalle allein oder in beliebiger Kombination zur Verwendung kommen. Der am Metall gebundene organische Rest des metallorganischen Wirkstoffes ist vorzugsweise eine durch Umsetzung mit einer Carbonsäure gebildete Metallseife.

Im folgenden werden das Verfahren gemäß der Erfindung und für das Verfahren geeignete Wirkstoffe anhand von Beispielen näher erläutert.

Beispiele für die Herstellung geeigneter Trockenstoffe:

### Beispiel 1: Trockenstoff 1

Der Trockenstoff 1 ist zusammengesetzt aus:

| | |
|---|---|
| 100 Teile | Calciumcarbonat (Calcit-Typ) |
| 7,94 Teile | Kobaltoctoat, Metallanteil: 1,2 Teile |

wobei dieser Trockenstoff 1 wie folgt hergestellt wird:

In einem mit Rührwerk und Destilliervorrichtung versehenen, geschlossenen Gefäß werden 100 Teile Calciumcarbonat mit 20 Teilen Kobaltoctoat-Lösung, Festkörper: 39,7 Gewichtsprozente, und 10 Teile Toluol als hochviskose Mischung 30 Minuten intensiv gerührt. Anschließend wird bei 90° C das enthaltene Lösemittel unter leichtem Rühren verdampft. Das zurückbleibende Agglomerat wird in einer Kugelmühle zerkleinert und anschließend gesiebt. Der zum Einsatz kommende Trockenstoff 1 hat eine Teilchengröße von ≤ 40 µm.

### Beispiel 2: Trockenstoff 2

Der Trockenstoff 2 ist zusammengesetzt aus:

| | |
|---|---|
| 100 Teile | Talkum |
| 22,40 Teile | Mischtrockner, und zwar Kobalt-, Barium-, Zinkoktoat, Metallanteile: 0,48/2,88/1,28 Teile, |

wobei dieser Trockenstoff 2 wie folgt hergestellt wird:

In einem mit Rührwerk und Destilliervorrichtung versehenen, geschlossenen Gefäß werden 100 Teile Talkum mit 40 Teilen Mischtrocknerlösung, Festkörper: 56,1 Gew.% und 20 Teilen Toluol als hochviskose Mischung 20 Minuten intensiv gerührt. Anschließend wird bei 90° C das enthaltene Lösemittel unter leichtem Rühren verdampft. Das zurückbleibende Agglomerat wird in einer Kugelmühle zerkleinert und anschließend gesiebt. Der zum Einsatz kommende Trockenstoff 2 hat eine Teilchengröße von ≤ 20 µm.

### Beispiel 3: Trockenstoff 3

Der Trockenstoff 3 ist zusammengesetzt aus:

| | |
|---|---|
| 100 Teile | Methylcellulose |
| 81,1 Teile | Kobaltoctoat, Metallanteil: 12 Teile |

wobei dieser Trockenstoff 3 wie folgt hergestellt wird:

In einem mit Rührwerk und Destilliervorrichtung versehenen, geschlossenen Gefäß werden 100 Teile Methylcellulose mit 100 Teilen Kobaltoctoatlösung, Festkörper: 81,1 Gewichtsprozente und 20 Teilen Testbenzin (Flammpunkt: 21° C) als hochviskose Mischung 30 Minuten intensiv gerührt. Anschließend wird bei 90° C das enthaltene Lösemittel unter leichtem Rühren verdampft. Das zurückbleibende Agglomerat wird in einer Kugelmühle zerkleinert und anschließend gesiebt. Der zum Einsatz kommende Trockenstoff 3 hat eine Teilchengröße von ≤ 2000 µm.

Nachfolgend werden Vergleichsversuche mit Beschichtungsstoffen beschrieben, die
A.) nach dem Verfahren gemäß der Erfindung mit einem Trockenstoff nach der Erfindung versetzt sind
   und
B.) mit einem vergleichbaren lösemittelhaltigen Sikkativ versetzt sind:

### Vergleichsversuch 1

| Beschichtungsstoff 1A | |
|---|---|
| 45 Teile | Wasserverdünnbares Alkydharz mit 46 % Sojaöl, Wasserverdünnbarkeit über aminneutralisierte Carboxylgruppen, Lösemittel: Wasser, ohne organische Lösemittel |
| 10 Teile | Titandioxid |
| 1 Teil | Phthalocyaninblau |
| 0,3 Teile | Antiabsetzmittel (nachbehandeltes Bentonit) |
| 10,8 Teile | Trockenstoff 1 (Beispiel 1) |
| 10,7 Teile | Wasser |

| Beschichtungsstoff 1B | |
|---|---|
| 45 Teile | Alkydharz (wie Beschichtungsstoff 1A) |
| 10 Teile | Titandioxid |
| 1 Teil | Phthalocyaninblau |
| 0,3 Teile | Antiabsetzmittel (nachbehandeltes Bentonit) |
| 10 Teile | Wasser |
| 10 Teile | Calcit |
| 1,5 Teile | Kobaltoctoatlösung für wäßrige Systeme, käuflich, Metallgehalt in Lösung: 8 %, lösemittel- und emulgatorhaltig |

Das Mischen der einzelnen Komponenten erfolgt wie üblich, durch Rühren mit geeigneten Rühraggregaten, z.B. Dissolver; anschließend wurde eine zusätzliche Dispergierung auf einer Rührwerkskugelmühle angeschlossen.

Die Metallgehalte der Trockenstoffe sind in den Beschichtungsstoffen 1A und 1B gleich. Folgende Trockenzeiten wurden nach DIN 53150 ermittelt:

| | Grad 1 | Grad 5 |
|---|---|---|
| Beschichtungsstoff 1A | 50 Minuten | 280 Minuten |
| Beschichtungsstoff 1B | 50 Minuten | 280 Minuten |

(Trockenschichtdicke: 80 µm).

### Vergleichsversuch 2:

| Beschichtungsstoff 2A | |
|---|---|
| 40 Teile | Alkydharz mit einem Anteil an 65 % oxidativ trocknendem öl (Sojaöl), gelöst in Testbenzin |
| 20 Teile | Titandioxid |
| 0,5 Teile | Verdickungsmittel (hydriertes Rizinusöl) |
| 5,34 Teile | Trockenstoff 2 (Beispiel 2) |
| 20,76 Teile | Testbenzin |

| Beschichtungsstoff 2B | |
|---|---|
| 40 Teile | Alkydharz (wie Beschichtungsstoff 2A) |
| 20 Teile | Titandioxid |
| 0,5 Teile | Verdickungsmittel (hydriertes Rizinusöl) |
| 4,36 Teile | Talkum |
| 1,74 Teile | Mischtrockner, und zwar Kobalt-, Barium-, Zinkoktoatlösung, Metallgehalte in Lösung: 1,2/7,2/3,2 %, in Testbenzin gelöst |
| 20 Teile | Testbenzin |

Das Mischen der einzelnen Komponenten erfolgt, wie üblich, durch Rühren mit geeigneten Rühraggregaten, z. B. Dissolver.

Die Metallgehalte der Trockenstoffe sind in den Beschichtungsstoffen 2A und 2B gleich.

Folgende Trockenzeiten wuden nach DIN 53150 ermittelt:

| | Grad 1 | Grad 5 |
|---|---|---|
| Beschichtungsstoff 2A | 90 min | 200 min |
| Beschichtungsstoff 2B | 90 min | 200 min |

(Trockenschichtdicke: 40 µm).

### Vergleichsversuch 3:

| Beschichtungsstoff 3A | |
|---|---|
| 48 Teile | Wasserverdünnbares Alkydharz mit 62 % oxidativ trocknendem Öl, Wasserverdünnbarkeit über aminneutralisierte Car boxylgruppen, gelöst in Mischung Wasser/Butylglykol = 93/7 |
| 1,6 Teile | Trockenstoff 3 (Beispiel 3) |
| 30,61 Teile | Wasser (darin wird Trockenstoff 3 verteilt) |

| Beschichtungsstoff 3B | |
|---|---|
| 48 Teile | Alkydharz (wie Beschichtungsstoff 3A) |
| 1,33 Teile | Kobaltoctoatlösung für wäßrige Systeme, käuflich, Metallgehalt in Lösung: 8 %, lösemittel- und emulgatorhaltig |
| 0,88 Teile | Methylcellulose |
| 30 Teile | Wasser (darin wird Methylcellulose verteilt) |

Das Mischen der einzelnen Komponenten erfolgt, wie üblich, durch Rühren mit geeigneten Rühraggregaten, z.B. Dissolver.

Die Metallgehalte der Trockenstoffe sind in den Beschichtungsstoffen 3A und 3B gleich.

Folgende Trockenzeiten wurden nach DIN 53 150 ermittelt:

| | Grad 1 | Grad 5 |
|---|---|---|
| Beschichtungsstoff 3A | 180 Minuten | 11 Stunden |
| Beschichtungsstoff 3B | 180 Minuten | 11 Stunden |

(Trockenschichtdicke: 30 µm)

Aus den oben wiedergegebenen Vergleichsversuchen ergibt sich, daß die nach dem Verfahren gemäß der Erfindung eingebrachten Trockenstoffe gemäß der Erfindung mindestens die gleichen, wenn nicht sogar bessere Effekte als die handelsüblichen Sikkative haben, ohne daß Lösemittel in das wäßrige Beschichtungsmittelsystem eingeschleppt wird.

## Patentansprüche

1. Verfahren zur Herstellung von lösemittelfreien, feinverteilten Trockenstoffen, die in einen flüssigen Beschichtungsstoff eingebracht werden, der ein oxidativ trocknendes Bindemittel enthält **dadurch gekennzeichnet,** daß metallorganische trocknungsbeschleunigende Wirkstoffe an als Trägerstoffe dienende und in den Beschichtungsstoff einzubringende Feststoffpartikel angelagert werden, wobei die als Trägerstoffe dienenden und in den Beschichtungsstoff einzubringenden Feststoffpartikel eine Primärteilchengröße von 0,002 µm bis 3000 µm aufweisen, in dem sie
- erhitzt und auf die als Trägerstoffe dienenden Feststoffpartikel aufgedampft werden, oder
- in einem geeigneten Lösemittel gelöst, sodann in gelöster Form mit den als Trägerstoffe dienenden Feststoffpartikeln vermischt und anschließend durch Verdampfen des Lösemittels an die als Träger dienenden Feststoffpartikel angelagert werden.

2. Trockenstoffe, hergestellt nach dem Verfahren gemäß Anspruch 1, dadurch gekennzeichnet, daß die Trägerstoffe anorganische Pigmente oder Füllstoffe auf der Basis von Silikaten, Sulfaten, Carbonaten, Oxiden oder Phosphaten sind und diese Trägerstoffe eine Teilchengröße zwischen 0,002 µm und 200 µm aufweisen.

3. Trockenstoffe, hergestellt nach dem Verfahren gemäß Anspruch 1, dadurch gekennzeichnet, daß die Trägerstoffe organische Pigmente und Additive sind und eine Primärteilchengröße von bis zu 40 µm aufweisen, wenn sie in dem Lösemittel des Beschichtungsstoffes unlöslich sind, sowie eine Primärteilchengröße von bis zu 3000 µm aufweisen, wenn sie in dem Lösemittel des Beschichtungsstoffes löslich sind.

4. Trockenstoffe nach Anspruch 2 dadurch gekennzeichnet, daß der Trägerstoff ein mit organischen Produkten modifiziertes anorganisches Pulver ist.

5. Verwendung der Trockenstoffe nach einem der Ansprüche 2 bis 4 in flüssigen, oxidativ trocknende Bindemittel enthaltenden Beschichtungsstoffen, die Wasser als Löse- bzw. Verdünnungsmittel enthalten.

6. Verwendung der Trockenstoffe nach einem der Ansprüche 2 bis 4 in flüssigen, oxidativ trocknende Bindemittel enthaltenden Beschichtungsstoffen, die organische Lösemittel enthalten.

## Claims

1. A process for the production of solvent-free, finely divided dry substances which are introduced into a liquid coating substance which contains an oxidatively drying binding agent, characterised in that organometallic drying-accelerating active substances are taken up by solid particles which serve as carrier substances and which are to be introduced into the coating substance, wherein the solid particles which serve as carrier substances and which are to be introduced into the coating substance are of a primary particle size of from 0.002 µm to 3000 µm, in which they are
- heated and vapour-deposited on the solid particles serving as carrier substances, or
- dissolved in a suitable solvent and then mixed in dissolved form with the solid particles serving as carrier substances and then taken up by the solid particles serving as the carrier substances by evaporation of the solvent.

2. Dry substances produced by the process according to claim 1 characterised in that the carrier substances are organic pigments or fillers based on silicates, sulphates, carbonates, oxides or phosphates and said carrier substances are of a particle size of between 0.002 µm and 200µm.

3. Dry substances produced by the process according to claim 1 characterised in that the carrier substances are organic pigments and additives and are of a primary particle size of up to 40 µm when they are insoluble in the solvent of the coating substance and are of a primary particle size of up to 3000 µm when they are soluble in the solvent of the coating substance.

4. Dry substances according to claim 2 characterised in that the carrier substance is an inorganic powder modified with organic products.

5. Use of the dry substances according to one of claims 2 to 4 in liquid coating substances which contain oxidatively drying binding agents and which contain water as solvents or diluents.

6. Use of the dry substances according to one of claims 2 to 4 in liquid coating substances which contain oxidatively drying binding agents and which contain organic solvents.

## Revendications

1. Procédé pour la production de siccatifs finement divisés, sans solvant, qui sont incorporés dans une couche fluide d'enduction qui contient un liant séchant par oxydation, caractérisé en ce que des agents actifs metallorganiques accélérant le séchage sont appliqués aux particules de matières solides servant de véhicule et à incorporer dans la matière d'enduction, les particules solides servant de véhicule et incorporées dans la matière d'enduction présentant une grandeur de particules primaires de 0,002 µm à 3000 µm, par le fait
- qu'ils sont chauffés et vaporisés sur les particules solides servant de véhicule ou
- qu'ils sont dissous dans un solvant approprié, ensuite mélangés sous forme dissoute avec les particules solides servant de véhicule et finalement appliqués par vaporisation du solvant sur les particules solides servant de support.

2. Siccatif produit selon le procédé de la revendication 1, caractérisé en ce que les véhicules sont des pigments inorganiques ou des charges à base de silicates, sulfates, carbonates, oxydes ou phosphates et ces véhicules présentent une grandeur de particules comprise entre 0,002 µm en 200 µm.

3. Siccatif produit selon le procédé de la revendication 1, caractérisé en ce que les véhicules sont des pigments organiques et des additifs et présentent une grandeur de particules primaires pouvant atteindre 40 µm quand ils sont insolubles dans le solvant de la matière d'induction ainsi qu'une grandeur de particules primaires pouvant atteindre 3000 µm quand ils sont solubles dans le solvant de la matière d'induction.

4. Siccatif selon la revendication 2, caractérisé en ce que le véhicule est une poudre inorganique modifiée par des produits organiques.

5. Utilisation des siccatifs selon l'une quelconque des revendications 2 à 4 dans des matières d'enduction contenant un liant séchant par oxydation, fluides, qui contiennent de l'eau en tant qu'agent solvant ou de dilution.

6. Utilisation des siccatifs selon l'une des revendications 2 à 4 dans des matières d'enduction contenant un liant séchant par oxydation, fluides, qui contiennent un solvant organique.
